# EUROPEAN PATENT APPLICATION

(11) **EP 0 588 604 A2**
(43) Date of publication of application: **23.03.1994**
(21) Application number: 93307253.0
(22) Date of filing: 13.09.1993
(51) Int. Cl.: A01M 29/00, A01G 13/10

(54) **Deterrent devices for animals**

(30) Priority: 12.09.1992 GB 9219399
(71) Applicant: CATSCAT LTD., Woodford Green, Essex IG8 0UG (GB)
(72) Inventor: Sewell, Anthony John, Walthamstow London E17 8ES (GB); Fadil, Joseph, Walthamstow London E17 (GB)
(74) Representative: Connor, Terence Kevin

(57) **Abstract**

An animal deterrent comprises an open grid or network in which first and second pluralities of members intersect, flexible spikes being provided extending generally normally from of side of the grid and wherein there is provided at least one anchor formed in the plane of the grid but which may be operably caused to extend away from that side of the grid opposed to said one side thereof. The anchors are adapted to be engaged and held by a surface on which the deterrent device is placed and are longer - three or more times as long - than the spikes. The anchors extend from parts of ones of said first or second pluralities of members and are longer than the spacing of individual ones of said first or second pluralities of members.

The device is of moulded plastics material (polythene) with the first and second pluralities of elongate members extending generally orthogonally of one another and the spikes are provided at the intersections of the first and second pluralities of elongate members. The anchors and spikes are moulded in the piece with the grid as it is made from low density polythene. The anchors are attached to parts of ones of said first or said second pluralities of members by means of a hinge mechanism and to others of said members by readily rupturable webs.

The anchors have triangular or barbed ends - they are provided as broad arrows, side edges of which are in the form of beads interconnected by a central web significantly thinner than said beads and the head of the anchors may taper in thickness. The readily rupturable web connections of said anchors to other members of said first and second pluralities of members is provided at the vertices of the triangular or barbed head of the anchor member.

## Description

The present invention relates to devices for deterring feral and domestic animals.

The fouling of gardens by cats, dogs and foxes is an increasingly common problem these days - especially in view of the increasing laxity of the owners of pets to prevent their pets causing nuisance and/or annoyance to their neighbours.

Cats are difficult to train to defecate in a particular place or area and their instinctive desire to bury their faeces often causes them to destroy or severely disturb seed, vegetable and flower beds.

Cats in particular are drawn to newly turned ground for the purpose of defecation which adds significantly to this problem and to the gardeners annoyance.

Additionally, the natural inquisitivness of cats, dogs and foxes will cause them to investigate any newly turned soil disturbing and seeds or seedlings which have been planted there.

Various methods of deterring animals are used at present and include for example the application of an irritant powder or a material which has an unpleasant odor.

Neither or these methods are thought to be environmentally friendly and both of them are, in any event, are thought to be ineffective and demanding in requiring continual application of the powder or the material to the area being protected.

Another suggestion which has been promoted recently includes the placement of a number of partially liquid filled transparent bottles around an area being protected.

The efficacy of this solution in deterring domestic and feral animals from approaching a protected area has not, to our knowledge, yet been proved and clearly this proposal is visually intrusive.

An object of the present invention is to provide a device which will deter feral and domestic animals from approaching an area, and in particular approaching and defecating upon an area of in which newly planted seeds or plants are located.

A second object of the invention is to provide a device which will deter feral and domestic animals from approaching an area and which is additionally environmentally inert and visually unobtrusive when in use.

In a first aspect the invention provides an animal deterrent device comprising an open grid or network in which first and second pluralities of members intersect, flexible spike formations being provided extending generally normally from of side of the grid and wherein there is provided at least one anchor member formed in the plane of the grid but which may be operably caused to extend away from that side of the grid opposed to said one side thereof.

The anchor members are preferably adapted to be engaged and held by a surface on which the deterrent device is placed.

Desirably, the anchor members are longer than the spike formations.

With advantage the anchor memberss are three or more times as long as the spike formations.

With particular advantage the anchor members have triangular or barbed ends.

Desirably, the deterrent device is made of moulded plastics material with the first and second pluralities of elongate members extending generally orthogonally of one another.

Said spike formations are preferably provided at the intersections of the first and second pluralities of elongate members.

Desirably, said anchor members are formed to extend from parts of ones of said first or second pluralities of members.

Preferably, the anchor members are longer than the spacing of individual ones of said first or second pluralities of members.

Desirably, the anchor members and spike formations are moulded in the piece with the grid as it is made, advantageously from low density polythene.

With particular advantage the anchor members are attached to parts of ones of said first or said second pluralities of members by means of a hinge mechanism and to others of said members by readily rupturable webs.

Said anchor members are desirably provided as broad arrows, side edges of which are in the form of beads interconnected by a central web significantly thinner than said beads.

The readily rupturable web connections of said anchor members to other members of said first and second pluralities of members is preferably provided at the vertices of the triangular or barbed head of the anchor member.

Preferably the head of the anchor member tapers

Preferably the head of the anchor member tapers in thickness in section.

The above aspects, features and advantages of the present invention will become apparent from the following description of an embodiment thereof now made with reference to the accompanying drawing, in which:-
Figure 1 is a plan view of a deterrent device embodying the present invention,
Figure 2 is a side view of the device of Figure 1 showing an anchor member thereof in an operable position,
Figure 3 is a detailed perspective view showing an anchor member of the device of Figure 1, and
Figure 4 is a sectional view of the anchor member shown in Figure 3.

The deterrent device shown in the Figures comprises a grid formation formed of first and second pluralities of elements 10 and 12 extending generally orthogonally one of the other and intersecting at a number of points 14. Elements 10 and 12 are preferably of the undulating or serpentine form shown.

A plurality of upstanding spike formations 16 are provided at the intersections 14 of ones of first and second members 10 and 12.

Each of the spikes 16 upstands from the grid to one side thereof by an amount approximately equal to the spacing of adjacent ones of the first and second members.

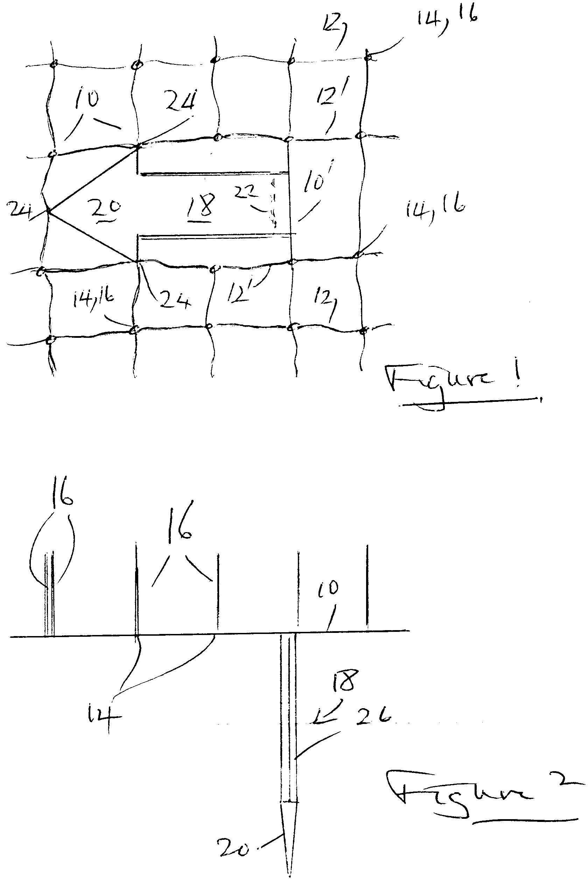

It will be seen, particularly from Figure 1, that a parts of a number of the first members 10 have been omitted and that in their place is provided an anchor member 18 attached to part 10' of one of the first members.

Anchor member 18 is generally of the form shown - that is to say in the form of a broad arrow extending from the part 10' of a member 10 towards another member 10" and terminating in a triangular head 20.

Anchor member 18 is attached to the part 10' by a 24 to adjacent ones 12' and 12" of the members 12 and to the part 10" as shown.

The deterrent device is moulded in the piece from any suitable plastics material - for example low density polythene.

When it is desired to use the deterrent device a user grasps it and pushes head 20 away from the plane of the grid to the side opposed to that on which the spikes 16 are provided.

In doing this he will rupture the web connections 24 between the head 20 of the anchor member and the parts 10", 12' and 12".

The user will then further rotate anchor member 18 about hinge formation 22 until it adopts a position in which it extends substantially normally of the grid.

The user may then place the deterrent device where he wishes - on newly turned soil, or on a lawn, by pushing the head 20 of anchor member into the ground such that is is engaged and held by the soil. In this way it will be seen the deterrent device is held firmly in position with the spike formations 16 upstanding from the surface on which the device is placed.

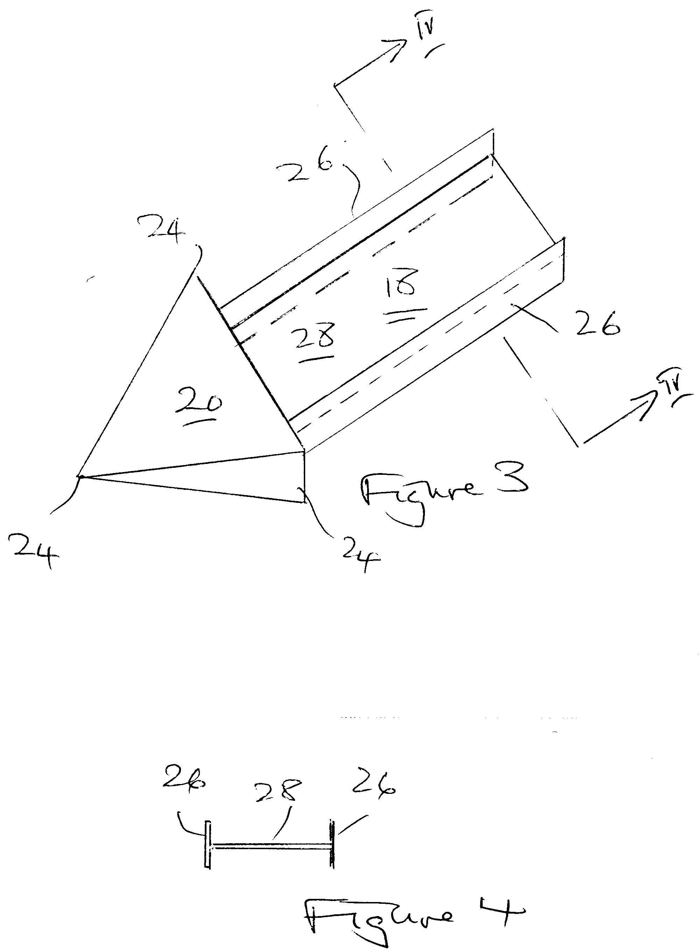

The anchor member's rigidity is increased - as can be seen particularly from Figures 3 and 4 - by providing that it is provided with side edge beads 26 interconnected by a central web 28 which is substantially thinner. It will be appreciated that for the main part the anchor member 18 is in the form of a I-beam.

To increase the ease with which the anchor member may be pushed onto the ground the head 20 of the anchor member tapers in thickness in passing from its root to its apex.

The hinge formation 22 by which the anchor member is attached to the part 10' of a member 10 of the grid may take any suitable form however, that form shown in the drawings is preferred where the hinge is provided as a pair of notches 30 in the side edge beads 26 which allow the anchor member to flex readily thereby enabling the anchor member to move from the position shown in Figure 1 (lying in the plane of the grid) to the position shown in Figure 2 (in which it extends normally of that plane).

Desirably the dimensions of the spike formations 16 are, as noted, substantially the same as the spacing of the elongate members 10 and 12 - preferably in the range of (1 to 2cm).

As can be seen from the drawing the anchor member is of significantly greater length (it has a length of between 3 and 6 cm) such that it will extend for a significant extent into any surface on which the deterrent device is placed.

It will be appreciated that due to the particular shape of the head 20 of the anchor member 18 the anchor member will firmly hold the deterrent device in place when it is pushed into soil.

The upstanding spike formations 16 are sufficiently sharp and extend upwardly for a sufficient extent to make it uncomfortable for feral or domestic animal - especially a cat in the act of defecation - to stand where the deterrent device is placed.

However, the spike formations 16 are sufficiently flexible and insufficiently sharp to cause injury to an animal or person who may inadvertantly fall on them or walk on them. As noted the material of the deterrent device is low density polythene and the spike formations 16 preferably taper in moving away from the grid to their rounded points.

As can be seen from the Figures the members 10 and 12 are of a generally undulating or serpentine form. It is believed that this decreases the visual obtrusivness of the deterrent device when it is positioned.

Whilst it is less preferred it will of cause be appreciated that the members 10 and 12 may, if desired, be made regular and straight in form.

Again the deterrent device which has been described is preferably provided in a brown or green colour to enhance it blending into its surroundings brown onto newly turned soil and green if the deterrent device is used on a lawn.

The open nature of the grid from which the deterrent device is formed will allow any plant material to grow through it - that is to say the growth of plants protected by the device will not be hindered by the deterrent device.

The deterrent device shown in Figure 1 is preferably a unit device comprising one quarter of a piece made in a single moulding operation which is thereafter cut or broken along the edges to provide the unit deterrent device shown.

It will be appreciated that the deterrent device as shown in the Figure may form merely a part of a larger deterrent device having a plurality of anchor members depending therefrom.

Devices embodying the invention may be provided in any shape or form which is desirable - that is to say in mats of four, eight, sixteen or more of the unit deterrent devices shown in the Figures.

One particularly advantageous arrangement embodying the present invention provides a deterrent device of indeterminate length but of the width of which is the width of two of the unit devices shown - in this way means for deterring animals may be sold as a roll from which a desired length may be cut by a user to suit a particular application.

It will be appreciated that many modifications may be made to the arrangements described without departing from the invention which provides a deterrent device which is visually unobtrusive, environmentally inert and which is operable to prevent domestic and feral animals approaching an area protected by the device.

## Claims

1. An animal deterrent device comprising an open grid or network in which first and second pluralities of members intersect, flexible spike formations being provided extending generally normally from of side of the grid and wherein there is provided at least one anchor member formed in the plane of the grid but which may be operably caused to extend away from that side of the grid opposed to said one side thereof.

2. A device as claimed in Claim 1, wherein the anchor members are adapted to be engaged and held by a surface on which the deterrent device is placed.

3. A device as claimed in Claim 1 or Claim 2, wherein the anchor members are longer than the spike formations.

4. A device as claimed in Claim 1 or Claim 3, wherein the anchor memberss are three or more times as long as the spike formations.

5. A device as claimed in any one of Claims 1 to 4 wherein the anchor members have triangular or barbed ends.

6. A device as claimed in any one of Claims 1 to 5, which is made of moulded plastics material with the first and second pluralities of elongate members extending generally orthogonally of one another.

7. A device as claimed in any one of Claims 1 to 6, wherein spike formations are provided at the intersections of the first and second pluralities of elongate members.

8. A device as claimed in any one of Claims 1 to 7, wherein said anchor members are formed to extend from parts of ones of said first or second pluralities of members.

9. A device as claimed in any one of Claims 1 to 8, wherein the anchor members are longer than the spacing of individual ones of said first or second pluralities of members.

10. A device as claimed in any one of Claims 1 to 9, wherein the anchor members and spike formations are moulded in the piece with the grid as it is made from low density polythene.

11. A device as claimed in any one of claims 8, 9 and 10, wherein the anchor members are attached to parts of ones of said first or said second pluralities of members by means of a hinge mechanism and to others of said members by readily rupturable webs.

12. A device as claimed in any one of the preceeding claims, wherein said anchor members are provided as broad arrows, side edges of which are in the form of beads interconnected by a central web significantly thinner than said beads.

13. A device as claimed in Claim 12, wherein said readily rupturable web connections of said anchor members to other members of said first and second pluralities of members is provided at the vertices of the triangular or barbed head of the anchor member.

14. A device as claimed in Claim 12 or Claim 13, wherein the head of the anchor member tapers in thickness in section.
